# EUROPÄISCHE PATENTSCHRIFT

(11) **EP 2 399 717 B1**
(45) Veröffentlichungstag und Bekanntmachung des Hinweises auf die Patenterteilung: **08.09.2021**
(21) Anmeldenummer: 11005068.9
(22) Anmeldetag: 22.06.2011
(51) Int. Cl.: B29B 13/02, B29C 35/12

(54) **Kapazitives Rohrerwärmungssystem**
Capacitative pipe heating system
Système capacitif de chauffage de tuyauteries

(30) Priorität: 23.06.2010 DE 102010017533; 06.09.2010 DE 102010037334
(43) Veröffentlichungstag der Anmeldung: 28.12.2011
(73) Patentinhaber: WAFIOS Tube Automation GmbH, 99510 Apolda (DE)
(72) Erfinder: Rosenberger, Gerhard, 99510 Apolda (DE); Grigull, Simon, 78176 Blumberg (DE)
(74) Vertreter: Patentanwälte und Rechtsanwalt Weiß, Arat & Partner mbB

(56) Entgegenhaltungen:
- EP-A1- 0 846 053
- EP-A2- 0 875 358
- DE-A1- 1 928 843
- GB-A- 629 371
- GB-A- 639 997
- GB-A- 986 076
- GB-A- 2 116 789
- US-A- 5 082 436
- None

## Beschreibung

### Technisches Gebiet

Die Erfindung betrifft eine Vorrichtung nach dem Oberbegriff des Anspruchs 1.

### Stand der Technik

Um Rohre, speziell Kunststoffrohre aus thermoplastischem Material, biegen zu können, müssen solche Rohre zuerst erhitzt werden. Die Erwärmung kann hierbei durch Heissluft, in einem Heissluftofen oder mit Hilfe von Heissluftdüsen, durch gezielte Infrarotstrahlung oder in einem Ölbad erfolgen. Die Hauptnachteile beim Erwärmen von Kunststoffrohren mit den gängigen Methoden sind eine ungleichmässige Wärmeverteilung, ein langsames Erwärmen aufgrund von Wärmeleitung sowie die Gefahr von Überhitzung bei schnelleren Verfahren. Weitere Nachteile sind die schlechte Energieeffizienz solcher Erwärmungsverfahren, die Verschmutzungs- und Brandgefahr bei der Erwärmung in Ölbädern sowie die Tatsache, dass ein kleinflächiges, gezieltes oder programmiertes Erwärmen nicht möglich ist.

Eine Biegevorrichtung, bei welcher die Erhitzung über stationäre Heizflächen, an welchen die Kunststoffrohre vorbeitransportiert werden, erfolgt, wird beispielsweise im Dokument DE 102 22 256 B4 offenbart.

In diesem Zusammenhang wird weiter auf die GB 986 076 A1 hingewiesen, welche den Oberbegriff des Anspruchs 1 offenbart und welche zwei Elektroden beschreibt, welche wiederum zum Erwärmen von Rohren genutzt werden.

Weiter wird auf die GB 2 116 789 A hingewiesen. Dort ist eine Vorrichtung gezeigt, welche ebenfalls mithilfe von Elektroden eine Erwärmung von Rohren beschreibt, um die Rohre dann in die gewünschte Form zu biegen.

Daneben wird auf die DE 1928 843 A1 verwiesen. Dort ist ein Verfahren beschrieben, bei der Rohre in einer bestimmten Art und Weise erwärmt extrudiert und anschliessend mithilfe der Restwärme in die gewünschte Form gebracht werden.

Ausserdem ist in der GB 629 371 A ein Verfahren und eine Vorrichtung beschrieben, bei der zu verformende Rohre aus einem dielektrisch reagierenden Material gefertigt sind und dadurch unter Einsatz von Hochfrequenzbereichen erwärmt werden können.

Ergänzend wird auf die U 5 082 436 A1 hingewiesen, welche ein dielektrisch wirkendes Material durch Einsatz eines Hochfrequenzbereiches erwärmt, wobei die Dicke eines extrudierten Materials vereinfacht einstellbar ist.

Auch wird auf die EP 0 846 053 A1 und die EP 0 875 358 A2 verwiesen. Dort sind ebenfalls Vorrichtungen gezeigt, welche unter Einsatz eines Hochfrequenzfeldes Rohre in definierten Punkten erwärmen können.

Der Vollständigkeit halber wird ausserdem auf die GB 639 997 A hingewiesen. Dort ist ebenfalls ein Verfahren beschrieben bei der unter Einsatz eines Heizelements ein Material in die gewünschte Form verbogen werden kann.

Bei einer solchen Erhitzung von Kunststoffrohren durch Heizflächen werden die Rohrwände typischerweise von aussen nach innen erwärmt. Hierbei besteht grundsätzlich die Gefahr, dass die Aussenseite der Rohrwand bereits ihre Verarbeitungstemperatur erreicht hat, wohingegen die Innenseite der Rohrwand noch kalt ist. Wird in einem solchen Fall weiter geheizt, um auch die Innenseite der Rohrwand auf eine optimale Verarbeitungstemperatur zu bringen, so kann es zu einem Verbrennen der Aussenseite der Rohrwand kommen.

Beim Erhitzen von Kunststoffrohren mit Heizflächen sind weiterhin die lange Zeit bis zum Erreichen der Verarbeitungstemperatur sowie die schlechte Energieeffizienz der Heizflächen nachteilig.

### Offenbarung der Erfindung

Es ist Aufgabe der Erfindung, die Nachteile des oben genannten Standes der Technik zu beheben oder zumindest zu vermindern, insbesondere ist es Aufgabe der Erfindung, eine Vorrichtung zum Erwärmen und Biegen von Kunststoffrohren zu schaffen, welche in der Lage ist, Kunststoffrohre gleichmässig und effizient zu erwärmen.

Die Aufgabe wird durch eine Vorrichtung zum Erwärmen eines Rohres gemäss Anspruch 1 gelöst. Unabhängige Gegenstände der Erfindung sind eine Hochfrequenz-Heizanlage und ein Verfahren gemäss den nebengeordneten Ansprüchen.

Die Erfindung hat gegenüber dem Stand der Technik den Vorteil, dass Kunststoffrohre gleichmässig von innen heraus erwärmt werden können und ein Verbrennen der Aussenseite der Rohrwand verhindert wird. Ausserdem können mit der Erfindung Kunststoffrohre schnell auf die gewünschte Verarbeitungstemperatur gebracht werden.

Erfindungsgemäss gilt als Rohrendabschnitt das Ende eines Rohrs. Dies kann entweder als Endlosrohr während, vor oder nach dem Erwärmen durch Abtrennung entstehen oder als fertig zugeschnittenes Rohr mit zwei Enden vorhanden sein. Als Endrohrabschnitt ist bevorzugt jeweils der Abschnitt des Rohrs vom Ende hin zur Mitte 15 cm bis 25 cm gemeint. Nach bevorzugter vom Ende hin zur Mitte 10 bis 20 cm und am bevorzugtesten vom Ende hin zur Mitte 5 bis 15 cm gemeint.

Erfindungsgemäss wird mit Umformen eine Unterart des Biegens angesprochen. Eine Umformung kann auch in der Weise stattfinden, als dass das Rohr beispielsweise im Querschnittprofil eine andere geometrische Form annehmen kann. Hier kommen ovale Querschnitte ebenso in Frage, wie auch drei- oder mehreckige Querschnitte.

Erfindungsgemäss ist eine Vorrichtung zum Erwärmen eines Rohres, insbesondere zum Erwärmen und Biegen eines Kunststoffrohres vorgesehen, welche über eine Innenelektrode und eine Aussenelektrode verfügt. Bei vorteilhaften Ausführungsformen sind die Innenelektrode und die Aussenelektrode in einer Weise angeordnet, sodass eine Rohrwand zwischen der Innenelektrode und der Aussenelektrode einführbar ist. Dies bietet den Vorteil, dass ein zu erwärmendes Rohr während des Erwärmvorgangs nicht radial zwischen der Aussenelektrode und der Innenelektrode verrutschen kann, wobei eine Bewegung in axialer Richtung, und somit eine Erwärmung im Vorschub, möglich ist. Erfindungsgemäß ist die Innenelektrode konzentrisch zu der Aussenelektrode angeordnet. Dies bietet den Vorteil, dass eine homogene und symmetrische Wärmeverteilung zwischen der Aussenelektrode und der Innenelektrode erreicht wird und dass die Rohrwand zwischen der Aussenelektrode und der Innenelektrode sehr gleichmässig erwärmt werden kann. Die Innenelektrode und/oder die Aussenelektrode sind hierbei vorteilhafterweise zylindrisch ausgebildet, wodurch Rohre mit rundem Querschnitt besonders einfach erwärmt werden können Bei typischen Ausführungsformen ist mindestens eine Innenelektrode oder eine Aussenelektrode ein Hohlkörper mit einem ellipsenförmigen Querschnitt. Vorteilhafterweise lassen sich mit der Vorrichtung auch Rohre mit einem elliptischen oder eckigen Querschnitt erwärmen.

Bei vorteilhaften Ausführungsformen ist eine Kombination aus Innenelektrode und Aussenelektrode in einem Isolatorblock eingelassen, welcher vorteilhafterweise aus Kunststoff, vorzugsweise Teflon oder Polyethylen, besteht. Der Kunststoffblock ist vorteilhafterweise aus mehreren Einzelteilen aufgebaut, wodurch eine einfache Zugänglichkeit der Aussenelektrode und der Innenelektrode gewährleistet wird, und verfügt über einen Durchführungskanal für eine Anschlussleitung, bevorzugt eine Koaxialleitung Bei typischen Ausführungsformen ist der Isolatorblock von einem Abschirmblech umgeben, welches typischerweise aus Kupfer oder einem anderen Metall besteht. Das Abschirmblech bietet den Vorteil, dass eine elektromagnetische Beeinflussung anderer elektrischer Geräte und lebender Organismen in der Umgebung der Vorrichtung vermieden wird. Bei vorteilhaften Ausführungsformen besitzt dieses Abschirmblech eine Anschlussöffnung für eine Koaxialleitung an der Stelle, an welcher sich der Durchführungskanal im Isolatorblock befindet.

Erfindungsgemäß ist die Aussenelektrode und/oder die Innenelektrode mit einer Spannungsquelle verbunden, welche in der Lage ist, einen Potenzialunterschied zwischen der Aussenelektrode und der Innenelektrode zu erzeugen. Dies bietet den Vorteil, dass beim Anlegen einer Spannung zwischen der Aussenelektrode und der Innenelektrode die Rohrwand schnell und gleichmässig durch ein elektrisches Feld, bevorzugt hochfrequentes elektrisches Feld, erwärmt wird. Bei besonders vorteilhaften Ausführungsformen ist die Spannungsquelle eine Hochfrequenzspannungsquelle mit einer Sendefrequenz von mindestens 1 MHz. Besonders bevorzugt wird eine Sendefrequenz von mindestens 3 MHz, vorzugsweise mindestens 5 MHz. Besonders vorteilhafte Sendefrequenzen liegen innerhalb der so genannten ISM-Bänder, also zwischen 6,765 MHz und 6,795 MHz, zwischen 13,553 MHz und 13,567 MHz, zwischen 26,957 MHz und 27,283 MHz, zwischen 40,66 MHz und 40,70 MHz, zwischen 433,05 Mhz und 434,79 MHz, zwischen 902 MHz und 928 MHz, zwischen 2,4 GHz und 2,5 GHz, zwischen 5,725 GHz und 5,875 GHz, zwischen 24 GHz und 24,25 GHz, zwischen 61 GHz und 61,5 GHz, zwischen 122 GHz und 123 GHz oder zwischen 244 GHz und 246 GHz. Besonders vorteilhaft sind Sendefrequenzen in ISM-Bändern des Typs B, vorteilhafterweise zwischen 13,553 MHz und 13,567 MHz, zwischen 26,957 MHz und 27,283 MHz oder zwischen 40,66 MHz und 40,70 MHz. Besonders bevorzugt werden Sendefrequenzen zwischen 10 MHz und 100 MHz. Die Verwendung von hochfrequenten Spannungen bietet den Vorteil, dass eine sehr schnelle Erwärmung der Rohrwand zwischen der Aussenelektrode und der Innenelektrode erreicht wird, da die der Rohrwand im elektrischen Feld zugeführte Wärmeleistung linear mit der Frequenz der Wechselspannung wächst.

Bei vorteilhaften Ausführungsformen der Erfindung ist zwischen der Spannungsquelle und der Aussenelektrode und/oder der Innenelektrode eine Anpassungseinrichtung zur Einstellung einer elektrischen Leistung angeordnet. Diese Anpassungseinrichtung umfasst typischerweise einen Resonanztransformator oder Übertrager zur Transformation der Hochfrequenz der Spannungsquelle auf ein höheres Spannungsniveau. Die Transformation auf ein höheres Spannungsniveau ist deswegen vorteilhaft, weil die der Rohrwand im elektrischen Feld zugeführte Wärmeleistung quadratisch mit der zwischen der Aussenelektrode und der Innenelektrode angelegten Spannung wächst. Vorteilhafterweise umfasst die Anpassungseinrichtung einen verstellbaren Anpasskondensator zur Anpassung der von der Aussenelektrode und der Innenelektrode zur Erwärmung des Kunststoffrohres benötigten elektrischen Leistung. Der gesamte Aufbau der Anpassungseinrichtung erfolgt typischerweise asymmetrisch und wird über Koaxialleitungen mit der Spannungsquelle und der Aussen- und Innenelektrode verbunden. Möglichst direkt an den Elektroden, vorteilhafterweise an der Innenelektrode, erfolgt ausserdem der Anschluss einer Masseelektrode. Vorteilhafterweise wird die Innenelektrode als Masseelektrode, sogenannte "kalte" Elektrode, ausgeführt und mit der Abschirmung des Heizsystems verbunden bzw. geerdet. Die Aussenelektrode stellt vorteilhafterweise die "heisse" Elektrode dar und ist daher komplett vom Kunststoffblock und der Abschirmung umgeben. An der "heissen" Elektrode liegt typischerweise ein Potential von mehreren Kilovolt an.

Bei vorteilhaften Ausführungsformen der Anpassungseinrichtung ist der Resonanztransformator ein Ringkernübertrager mit einem Eisenpulverkern mit einem Übersetzungsverhältnis von 1:3 bis 1:30 besonders bevorzugt 1:5 bis 1:20, wobei Übersetzungen zwischen 1:7 und 1:15 besonders vorteilhaft sind.

Bei typischen Ausführungsformen der Erfindung ist an der Vorrichtung zur Erwärmung eines Rohres eine Vorschubeinrichtung zum axialen Verschieben des Rohres in der Aussenelektrode angeordnet. Eine solche Vorschubeinrichtung hat den Vorteil, dass das Rohr während des Erwärmens an der Heizstelle vorbei geschoben werden kann, wodurch unterschiedliche Bereiche der Rohrwand sukzessive erwärmt werden können. Bei typischen Ausführungsformen wird die Ausgangsspannung und somit die Sendeleistung der Spannungsquelle mit dem Maschinenvorschub synchronisiert oder geregelt. Auf diese Weise wird ein kontrolliertes Erwärmen bestimmter Rohrwandbereiche möglich. Besonders vorteilhaft ist es, wenn die Ausgangsspannung der Spannungsquelle bei nicht vorhandenem Rohr oder fehlendem Vorschub automatisch auf null gebracht wird.

Bei typischen Ausführungsformen der Vorrichtung zur Erwärmung eines Rohres umfasst die Innenelektrode eine Biegefeder zum Biegen des erwärmten Rohres. Vorteilhafterweise ist die Innenelektrode selbst als Stahlfeder ausgebildet, wobei die Eignung dieser Stahlfeder für Hochfrequenzanwendungen durch eine Beschichtung der Stahlfeder vorteilhafterweise verbessert wird. Besonders vorteilhaft ist es, wenn eine als Stahlfeder ausgebildete Innenelektrode verkupfert oder versilbert ist. Bei vorteilhaften Ausführungsformen wird die Induktivität der Stahlfeder durch einen zusätzlich im Innern der Stahlfeder eingelegten Draht herabgesetzt. Dieser Draht besteht vorzugsweise aus einem leitenden Material, bevorzugt aus Kupfer oder Silber. Besonders vorteilhaft ist es, wenn die Innenelektrode der Vorrichtung elektrisch leitend mit der Masse der Spannungsquelle verbunden ist.

Besonders vorteilhaft ist der Aufbau von Hochfrequenz-Heizanlagen, bei welchen eine einzige Spannungsquelle mit einer Mehrzahl von Aussenelektroden und einer Mehrzahl von Innenelektroden verbunden ist. Auf diese Weise wird ein gleichzeitiges Erwärmen und Biegen von mehreren Rohren, ein so genanntes Multibiegen ermöglicht.

Bei einer solchen Hochfrequenz-Heizanlage ist es vorteilhaft, zwischen der Spannungsquelle und den Aussen- und Innenelektroden eine Hochfrequenz-Verteilung anzuordnen, mit Hilfe welcher die Verteilung der elektrischen Leistung auf die Paare der Aussenelektroden und der Innenelektroden einstellbar ist. Typischerweise umfasst die Hochfrequenz-Verteilung Anpassungsnetzwerken.

Bei einer erfindungsgemässen Hochfrequenz-Heizanlage ist die Spannungsquelle vorzugsweise ein Hochfrequenzsender mit einer Frequenz von 13,56 MHz oder 27,12 MHz, welcher bevorzugterweise unempfindlich gegenüber Störungen, vor allem unempfindlich gegen Leistungsreflexion und Rückleistung, ist. Der Hochfrequenzsender ist vorteilhafterweise in der Lage, 100 W bis 1000 W, bevorzugt 300 W bis 500 W pro Paar der Aussenelektroden und der Innenelektroden zur Verfügung zu stellen. Bevorzugterweise ist der Hochfrequenzsender über eine digitale Schnittstelle fernsteuer- und diagnostizierbar. Vorteilhafte Ausführungsformen des Hochfrequenz-Senders werden direkt aus dem Stromnetz mit 230 V oder 400 V oder einer anderen Netzspannung gespeist, sind transistorisiert und gekühlt, wobei bei kleinen Leistungen eine Luftkühlung bevorzugt wird.

Die Anpassungseinrichtung in einer Hochfrequenz-Heizanlage ist vorteilhafterweise so ausgebildet, dass sie die Messung und Regelung verschiedener Betriebsparameter der Hochfrequenzheizanlage übernehmen kann. Dies bietet den Vorteil, dass der Erwärmungsvorgang direkt in der Anpassungseinrichtung gesteuert werden kann. Bevorzugte Ausführungsformen einer Anpassungseinrichtung verfügen über eine Hochfrequenzanschlussbuchse zum Anschluss einer von der Spannungsquelle kommenden Hochfrequenz-Leitung, bevorzugt eine N-Buchse, sowie über einen Richtkoppler zur Auskopplung von Hin- und Rückspannung, welcher den Vorteil einer einfachen Reflexions- und Leistungsmessung bietet. Ein Anpassungsnetzwerk in der Anpassungseinrichtung umfasst vorteilhafterweise eine Einspeisespule, einen Vakuumkondensator, einen Festkondensator und einen Übertrager. Das Anpassungsnetzwerk wird vorteilhafterweise von einem Schirmgehäuse elektromagnetisch abgeschirmt, welches bevorzugterweise eine Luftführung umfasst. Ein in der Anpassungseinrichtung angeordneter Drehkondensator umfasst vorzugsweise einen Stellantrieb mit Drehgeber, was den Vorteil bietet, dass die der Rohrwand zugeführte Wärmeleistung über den Stellantrieb automatisch einstellbar ist Bei bevorzugten Ausführungsformen ist in der Anpassungseinrichtung ein Ventilator mit Drehzahlüberwachung zur Luftkühlung angeordnet. Bei besonders vorteilhaften Ausführungsformen der Anpassungseinrichtung umfasst die Luftkühlung unterschiedliche Temperatursensoren, beispielsweise am Lufteinlass, am Luftauslass, am Stellantrieb und an verschiedenen elektronischen Komponenten. Dies bietet den Vorteil, dass über die Lufttemperaturen an den verschiedenen Stellen der An Rückschlüsse auf den Erwärmungsvorgang des Rohres gezogen werden können. Typischweise verfügt die Anpassungseinrichtung über ein Mikrokontrollersystem, welches bevorzugterweise über eine Anbindung an ein Bussystem, vorzugsweise CAN-Bus, verfügt. Besonders vorteilhafte Mikrokontrollersysteme verfügen über einen Abgleichparameterspeicher, einen Protokollspeicher, eine Adresseinstellung, eine Ansteuerung für den Stellantrieb des Drehkondensators, eine Sensorauswertung sowie eine Spannungsversorgung, bevorzugt 24 V. Bei typischen Ausführungsformen der Anpassungseinrichtung sind Anschlussbuchsen für die Anbindung an das Bussystem und die Versorgungsspannung sowie unterschiedliche Durchschleifbuchsen zur Verbindung mehrerer Einheiten vorgesehen. Besonders vorteilhaft ist es, wenn ein Aussengehäuse mit einer Offnungsüberwachung ausgestattet ist. Dies bietet den Vorteil, dass ein Betrieb der Anpassungseinrichtung bei geöffnetem Gehäuse unmöglich ist, wodurch Gesundheitsschäden vermieden werden. Bei bevorzugten Ausführungsformen der Anpassungseinrichtung wird die Anpassungseinrichtung von einem Rechner oder einer speicherprogrammierbaren Steuerung, einer so genannten SPS, gesteuert. Besonders vorteilhaft ist es, wenn die Steuerung der Anpassungseinrichtung von einer übergeordneten Kontrolleinrichtung, vorzugsweise einem Heizregler, übernommen wird.

Eine erfindungsgemässe Kontrolleinrichtung oder ein Heizregler umfassen vorteilhafterweise ein Netzteil oder eine Kombiversorgung mit einer Eingangsspannung zwischen 6 V und 500 V, wobei Eingangsspannungen zwischen 110 V und 420 V oder 12 V und 30 V, vorzugsweise 24 V, bevorzugt werden. Bei typischen Ausführungen umfasst die Kontrolleinheit ein Prozessorboard mit einem Prozessor, bevorzugt dsPiC-Prozessor, sowie einen USB-Host zur Datenspeicherung und Protokollierung. Vorzugsweise umfasst die Kontrolleinheit einen Datenstick oder eine Speicherkarte zur Datenspeicherung und Protokollierung. Typische Ausführungsformen einer Kontrolleinheit zeichnen sich durch eine Frontplatine mit LEDs, Drehgebern oder Displays aus. Bei vorteilhaften Ausführungsformen sind auf der Rückplatine der Kontrolleinheit mehrere Schnittstellen und Eingänge sowie Ausgänge angeordnet.

Bei einem bevorzugten Verfahren zur Erwärmung eines Rohres wird typischerweise zuerst die Rohrwand des Rohres zwischen die Innenelektrode und die Aussenelektrode der Vorrichtung eingeführt. Dabei wird vorzugsweise zuerst die Innenelektrode in das zu biegende Rohr eingefädelt. Anschliessend wird die Innenelektrode mit dem Rohr vorzugsweise in die Aussenelektrode eingeschoben. Anschliessend wird durch die Spannungsquelle und die Anpassungseinrichtung ein Potentialunterschied zwischen der Aussenelektrode und der Innenelektrode erzeugt. Aus diesem Potentialunterschied resultiert ein elektrisches Feld, in welchem die Rohrwand des Rohres als Dielektrikum wirkt. Vorzugsweise sind die Aussenelektrode, die Innenelektrode und die als Dielektrikum wirkende Rohrwand als Zylinderkondensator angeordnet. Je grösser dabei der dielektrische Verlustfaktor des Rohrmaterials ist, desto schneller erwärmt sich die Rohrwand im elektrischen Feld zwischen Aussenelektrode und Innenelektrode. Während dieses Verfahrens zur Erwärmung eines Rohres führt die Anpassungseinrichtung neben der eigentlichen Anpassung der Hochfrequenzspannung typischerweise weitere Aufgaben wie z. B. die Überwachung des Gehäuses, der Betriebsspannung, des Datenbus, der Temperaturen und/oder des Ventilators aus. Typischerweise wird von der Anpassungseinrichtung auch die Belüftung bedarfsorientiert angesteuert und der Stellmotor für den Vakuumskondensator angesteuert. Bei vorteilhaften Verfahren wird die Stellmotorposition anhand von Messwerten aus dem Richtkoppler, und/oder der Spannungsquelle oder Sollwerten aus dem zentralen Heizregler geregelt. Vorzugsweise werden Signale aus dem Richtkoppler ausgewertet, bestimmte den Erwärmungsvorgang betreffende Ereignisse protokolliert und/oder der Erwärmvorgang anhand von Vorgaben aus der Kontrolleinheit überwacht. Typischerweise sind solche Vorgaben die Heizzeit, die Energieaufnahme oder der Nachregelbereich. Zwischen der Anpassungseinrichtung und der Kommunikationseinheit findet vorzugsweise eine Plug-and-Play-Kommunikation statt, wobei Parameterdaten zur Erkennung des jeweiligen Rohrmaterials bereitgestellt werden.

Bei einem typischen Verfahren zur Erwärmung eines Rohres wird in der Anpassungseinrichtung die von der Aussenelektrode und/oder der Innenelektrode in die Anpassungseinrichtung reflektierte Leistung gemessen. In Abhängigkeit dieser reflektierten Leistung wird bei vorteilhaften Verfahren vorzugsweise durch die Kontrolleinheit ein Sollwert für eine elektrische Leistung vorgegeben. Typischerweise erfolgt die Regelung der elektrischen Leistung direkt über die Spannungsquelle oder über den Anpasskondensator in der Anpassungseinrichtung. Der Kontrolleinheit, welche vorzugsweise als zentraler Heizregler ausgeführt ist, kommt bei vorteilhaften Ausführungsformen die Überwachung und Freigabe des Gesamtsystems sowie die bidirektionale Kommunikation mit der Anpassungseinrichtung und den Aussen- und Innenelektroden zu. Bei vorteilhaften Ausführungsformen übernimmt die Kontrolleinheit die übergeordnete Regelung des Erwärmungsablaufs nach Materialparametern oder Benutzereinstellungen. Bevorzugterweise führt die Kontrolleinheit eine Protokollierung oder Datensammlung zur Verfeinerung zukünftiger Entwicklungen oder zur Erstellung von Werkstück-, Material- oder Geometrie-Parametertabellen durch. Bei vorteilhaften Verfahren zur Erwärmung eines Rohres berechnet die Kontrolleinheit Heizkurven auf der Grundlage von durch den Benutzer vorgegebenen Verarbeitungstemperaturen, Vorschubgeschwindig-keiten, Materialdaten, Rohrgeometrien, Heizdauern oder Heizlängen. Typischerweise übernimmt die Kontrolleinheit die Überwachung der Hochfrequenzspannungsquelle und die Regelung der Hochfrequenzsendeleistung in Hochfreuqenz-Heizanlagen unter Einbezug der Hin- und Rückleistungen der einzelnen Paare von Aussen- und Innenelektroden. Besonders bevorzugt werden Verfahren, bei denen die Kontrolleinheit den gesamten Erwärmungsprozess überwacht und protokolliert, wobei vorzugsweise Einzelwerkstückzuordnungen zu aufgezeichneten Daten als Qualitätsnachweis für besonders kritische Bauteile angelegt werden. Bei besonders bevorzugten Verfahren zur Erwärmung von Kunststoffrohren arbeitet die Kontrolleinrichtung mit regressiven Heizkurven, wobei eine Grundleistung, eine Endleistung und/oder eine Startleistung berechnet werden. Die Grundleistung wird rechnerisch benötigt, um die gewählte Rohrlänge ohne Verluste und Verzug auf die benötigte Temperatur zu erwärmen. Die Endleistung ergibt sich aus der Summe der Grundleistung und der auftretenden Abkühlverluste. Die Endleistung wird am Ende der Erwärmungsphase erreicht und stellt die Leistung dar, welche zum Erwärmen des Rohrabschnitts auf die nötige Übertemperatur zum Erreichen der Verarbeitungstemperatur am Biegekopf notwendig ist. Die Startleistung entspricht der Summe aus Endleistung und der Abkühlung während der gleitenden Erwärmung und wird benötigt, da das Rohr noch während des Erwärmungsvorgangs wieder abkühlt und somit der bereits aufgewärmte Teil abkühlt, während der Rest noch erwärmt wird. Bei typischen Kontrolleinheiten kann zumindest ein Teil der Parameter der Heizkurven durch den Benutzer vorgegeben werden. Besonders bevorzugt werden Kontrolleinheiten, welche anhand von Datentabellen automatisch aus mindestens einem Parameter die entsprechenden Heizkurven ermitteln können. Typischerweise sind solche Parameter das Rohrmaterial, der Rohrdurchmesser, die Rohrstärke, die Heizstrecke, der Vorschub, die Verarbeitungstemperatur, die minimale Heizzeit, die maximale Leistung oder die Abkühlparameter der Maschine, bevorzugt die Distanz zum Biegekopf oder die Wärmeableitung.

Bei typischen Verfahren zur Erwärmung von Rohren werden die tatsächlichen Oberflächentemperaturen der Rohrwände nach dem Erwärmprozess mit Pyrosensoren berührungslos erfasst und der Gesamterwärmungsprozess so intelligent angepasst. Beim Erwärmen eines Rohres verändert sich ausserdem typischerweise das Materialgefüge des weich werdenden Rohres, wodurch die Dielektrizitätskonstante und der Verlustfaktor variieren. Diese Veränderung erfordert ein Nachregeln der Anpassung, wodurch vorteilhafterweise ein indirekter Temperaturmesswert aus dem Prozess gewonnen werden kann, der direkte Rückschlüsse auf den Werkstückszustand zulässt. Dies hat den Vorteil, dass keine Temperatursensoren notwendig sind.

Bei bevorzugten Verfahren zum Erwärmen und Biegen von Kunststoffrohren wird das erwärmte und gebogene Rohr mit Hilfe von flüssigem Stickstoff abgekühlt, wobei der flüssige Stickstoff vorzugsweise von beiden Seiten in das Rohr eingeleitet wird. Hierdurch ergibt sich der Vorteil, dass das Rohr gleichmässig und schnell abkühlbar ist.

### Beschreibung der Zeichnungen

Nachfolgend wird die Erfindung anhand schematischer Zeichnungen näher erläutert, die zeigen:
Figur 1: Eine Schnittansicht einer Innenelektrode und einer Aussenelektrode, zwischen welche eine Rohrwand eingeschoben ist,
Figur 2: Eine perspektivische Ansicht einer Rohrerwärmungseinrichtung, welche von einem Kupferblech abgeschirmt ist und durch welche die in Figur 1 gezeigte Innenelektrode mit aufgeschobener Rohrwand hindurch geschoben ist,
Figur 3: Ein elektrisches Schaltbild einer Anpassungseinrichtung und einer Rohrerwärmungseinrichtung und
Figur 4: Eine schematische Übersicht über eine Hochfrequenz-Heizanlage mit vier Rohrerwärmungseinrichtungen
Figur 5: Eine perspektivische Ansicht einer Rohrerwärmungsvorrichtung, bei welcher alle hochspannungsführenden Teile in einem Abschirmgehäuse angeordnet sind.
Figur 6: Eine perspektivische Ansicht der bereits in Figur 5 gezeigten Rohrerwärmungsvorrichtung, jedoch mit abgenommenem Abschirmgehäuse.

### Beschreibung von bevorzugten Ausführungsbeispielen

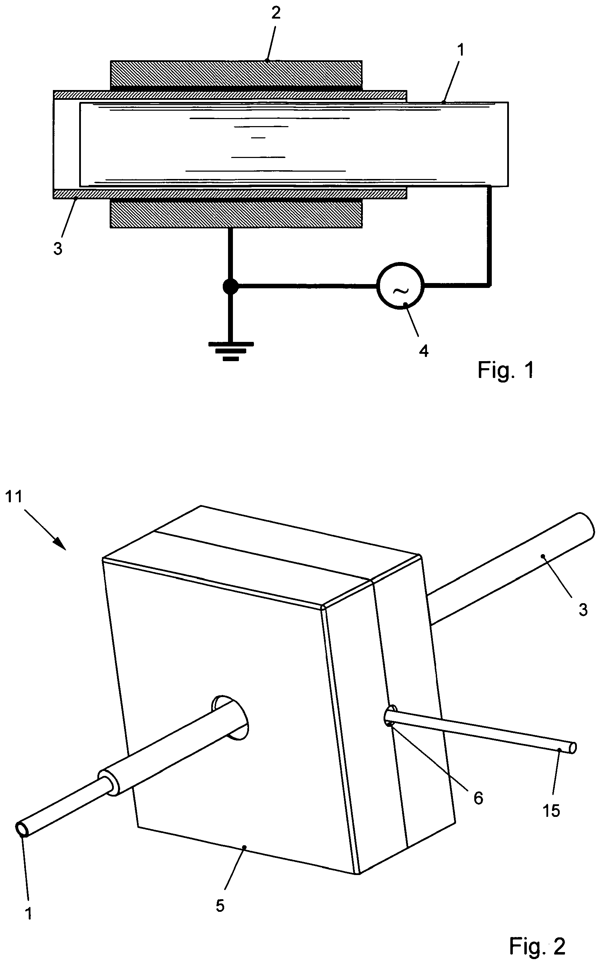

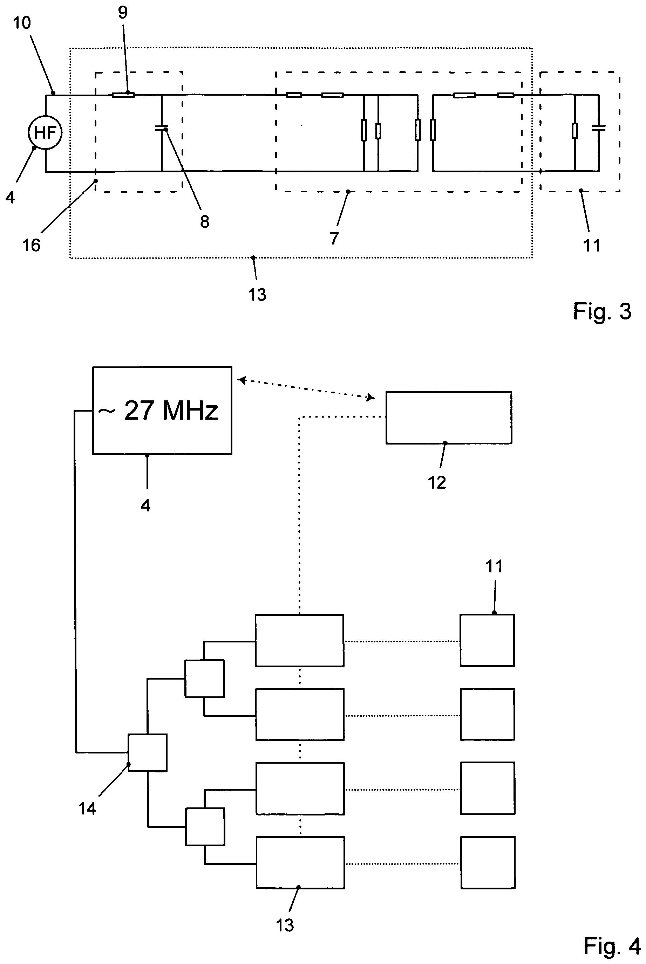

Figur 1 zeigt eine als Biegedorn ausgebildete Innenelektrode 1, welche in ein Kunststoffrohr eingefädelt ist. Das Kunststoffrohr zusammen mit der eingefädelten Innenelektrode 1 ist seinerseits in eine zylindrische Aussenelektrode 2 eingeführt. Zwischen der Innenelektrode 1 und der Aussenelektrode 2 befindet sich somit die Rohrwand 3 des Kunststoffrohres. Die Innenelektrode 1 und die Aussenelektrode 2 sind über eine Anpassungseinrichtung 13, deren Aufbau in Figur 3 schematisch dargestellt ist, mit einer Spannungsquelle 4 verbunden. Die Spannungsquelle 4 erzeugt eine Spannung zwischen der Innenelektrode 1 und der Aussenelektrode 2. Die Rohrwand 3 wirkt als Dielektrikum im resultierenden elektrischen Feld zwischen der Innenelektrode 1 und der Aussenelektrode 2. Je grösser dabei der dielektrische Verlustfaktor des Rohrmaterials ist, desto schneller erwärmt sich die Rohrwand 3 im elektrischen Feld zwischen Aussenelektrode 2 und Innenelektrode 1.

Figur 2 zeigt eine Rohrerwärmungseinrichtung 11 umfassend die in Figur 1 gezeigte Innenelektrode 1, Aussenelektrode 2 und Rohrwand 3. Die Aussenelektrode 2 (in Figur 2 nicht gezeigt ) ist von einem in Figur 2 nicht näher gezeigten Isolatorblock umschlossen, welcher seinerseits von einem Abschirmblech 5 umhüllt ist. Die Rohrwand 3 eines Kunststoffrohres umschliesst die als Biegfeder ausgebildete zylindrische Innenelektrode 1 und ist konzentrisch in der nicht näher gezeigten Aussenelektrode 2 der Rohrerwärmungseinrichtung 11 angeordnet. Durch eine Anschlussöffnung 6 ist ein Koaxialkabel 15 in die Rohrerwärmungseinrichtung eingeführt, um die Aussenelektrode 2 mit einer nicht näher gezeigten Spannungsquelle 4 zu verbinden.

Figur 3 zeigt ein elektrisches Schaltbild der Anpassungseinrichtung 13, bestehend aus einem Übertrager 7, welcher in seinem elektrischen Ersatzschaltbild dargestellt ist und einem Anpassnetzwerk 16. Das Anpassnetzwerk 16 umfassteinen Anpasskondensator 8, welcher als Vakkuumdrehkondensator ausgeführt ist, und eine Anpassspule 9. Über eine Koaxialleitung 10 ist die Anpassungseinrichtung 13 mit der Spannungsquelle 4 verbunden. Die Anpassungseinrichtung 13 stellt eine elektrische Leistung für die Rohrerwärmungseinrichtung 11 zur Verfügung, welche in Figur 3 in ihrem elektrischen Ersatzschaltbild dargestellt ist. Die Aufgabe des Übertragers 7 ist es, die von der Spannungsquelle 4 ausgesendete Hochfrequenzspannung auf ein höheres Spannungsniveau zu transformieren. Mit Hilfe des Anpasskondensators 8 wird in Verbindung mit der Anpassspule 9 und dem Übertrager 7 die von der in Figur 1 gezeigten Aussenelektrode 2 und der in Figur 1 gezeigten Innenelektrode 1 zur Erwärmung des Kunststoffrohres benötigte elektrische Leistung eingestellt.

Figur 4 zeigt schematisch den Aufbau einer Hochfrequenz-Heizanlage zum Multibiegen mit vier Rohrerwärmungseinrichtungen 11 (wie in Figur 2 gezeigt), welche über eine einzige Spannungsquelle 4 mit Energie versorgt werden. Die von der Spannungsquelle 4 bereitgestellte Hochfrequenzleistung wird über drei Hochfrequenzverteilungen 14 gleichmässig auf vier Anpassungseinrichtungen 13 (wie in Figur 3 dargestellt) verteilt. Jede der vier Anpassungseinrichtungen 13 ist mit einer der vier Rohrerwärmungseinrichtungen 11 verbunden. Eine als zentraler Heizregler ausgebildete Kontrolleinheit 12 steht mit jeder der vier Anpassungseinrichtungen 13 in Verbindung und kontrolliert im Zusammenspiel mit der Spannungsquelle 4 den gesamten Rohrerwärmungsprozess.

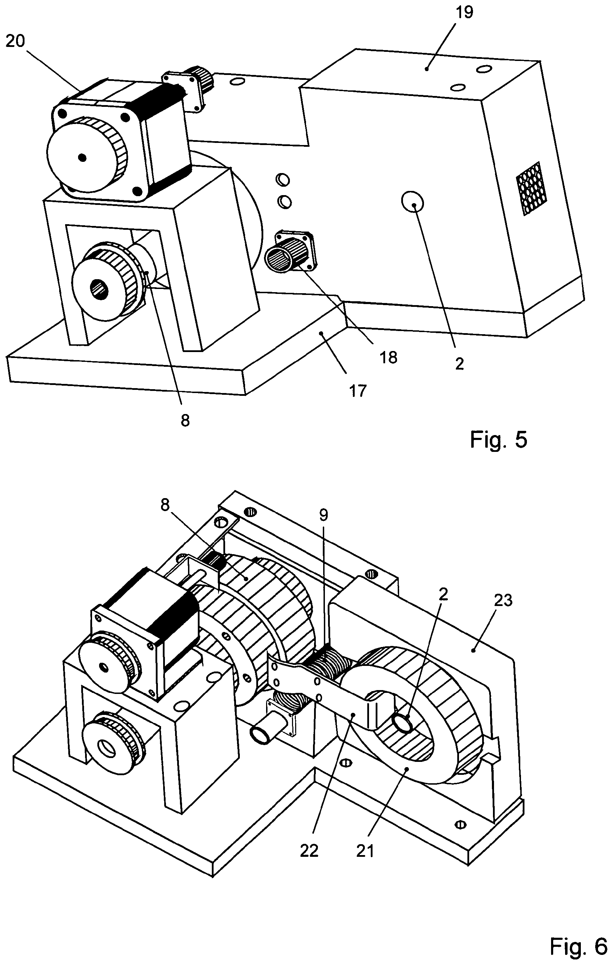

Figur 5 und Figur 6 zeigen ein typisches Ausführungsbeispiel der Erfindung, bei welchem alle hochspannungsführenden Teile der Vorrichtung in einem Abschirmgehäuse 19 angeordnet sind. Hierdurch werden mögliche Gefahren durch hochfrequente elektromagnetische Strahlung reduziert. Figur 5 zeigt das Abschirmgehäuse 19, welches auf eine Bodenplatte 17 aufgesetzt ist. Um ein nicht näher gezeigtes Kunststoffrohr mit einer nicht näher gezeigten Innenelektrode in die Aussenelektrode 2 einführen zu können, weist das Abschirmgehäuse 19 längsseitig eine Öffnung auf, welche den Zugang zur Aussenelektrode 2 freigibt. Über eine Anschlussbuchse 18 wird die Vorrichtung zur Erwärmung von Rohren mit einer nicht näher gezeigten Spannungsquelle verbunden. Der Anpasskondensator 8 ragt teilweise aus dem Abschirmgehäuse 19 heraus und kann mit Hilfe eines Stellmotors 20 auf einen vorgegebenen Wert eingestellt werden. Figur 6 zeigt das typische Ausführungsbeispiel ohne Abschirmgehäuse 19. Diese Darstellung gibt den Blick auf den im Innern des Abschirmgehäuses 19 angeordneten Teil des Anpasskondensators 8, auf die als Luftspule ausgeführte Anpassspule 9, auf einen Ringkern 21 und eine Primärwicklung 22 des Überttragers 7 (in Figur 6 nicht komplett gezeigt) sowie auf die Aussenelektrode 2 frei. Der Ringkern 21 ist konzentrisch um die Aussenelektrode 2 angeordnet und befindet sich innerhalb eines Isolatorblocks 23 aus Kunststoff, welcher zweigeteilt aufgebaut ist und von welchem in Figur 6 nur ein Teil gezeigt ist. Der Isolatorblock 23 ist seinerseits komplett im nicht näher gezeigten Abschirmgehäuse 19 (siehe Figur 5) angeordnet. Hochspannung führt dann nur noch eine nicht näher gezeigte Sekundärwicklung, die auf der einen Seite mit der Aussenelektrode 2 und auf der anderen Seite mit dem nicht näher gezeigten geerdeten Abschirmgehäuse 19 (siehe Figur 5) verbunden ist.

Die Erfindung ist nicht auf die vorstehend beschriebenen Ausführungsbeispiele beschränkt. Vielmehr wird der Schutzumfang durch die Ansprüche bestimmt.

**Bezugszeichenliste**

| | | | | | |
|---|---|---|---|---|---|
| 1 | Innenelektrode | 34 | | 67 | |
| 2 | Aussenelektrode | 35 | | 68 | |
| 3 | Rohrwand | 36 | | 69 | |
| 4 | Spannungsquelle | 37 | | 70 | |
| 5 | Abschirmblech | 38 | | 71 | |
| 6 | Anschlussöffnung | 39 | | 72 | |
| 7 | Übertrager | 40 | | 73 | |
| 8 | Anpasskondensator | 41 | | 74 | |
| 9 | Anpassspule | 42 | | 75 | |
| 10 | Koaxialleitung | 43 | | 76 | |
| 11 | Rohrerwärmungseinrichtung | 44 | | 77 | |
| 12 | Kontrolleinheit | 45 | | 78 | |
| 13 | Anpassungseinrichtung | 46 | | 79 | |
| 14 | Hochfrequenzverteilung | 47 | | | |
| 15 | Koaxialkabel | 48 | | | |
| 16 | Anpassnetzwerk | 49 | | | |
| 17 | Grundplatte | 50 | | | |
| 18 | Anschlussbuchse | 51 | | | |
| 19 | Abschirmgehäuse | 52 | | | |
| 20 | Stell motor | 53 | | | |
| 21 | Ringkern | 54 | | | |
| 22 | Primärwicklung | 55 | | | |
| 23 | Isolatorblock | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Erwärmen eines Rohres, insbesondere zum Erwärmen und Biegen oder eines Kunststoffrohres, mit
- einer Innenelektrode (1) und
- einer Aussenelektrode (2)
und die Aussenelektrode (2) und/oder die Innenelektrode (1) mit einer Spannungsquelle (4) verbunden sind,
wobei die Innenelektrode und die Aussenelektrode derart angeordnet sind, so dass eine Rohrwand (3) zwischen der Innenelektrode und der Aussenelektrode einführbar ist, und die Innenelektrode (1) konzentrisch zu der Aussenelektrode (2) angeordnet ist, **dadurch gekennzeichnet, dass** die Innenelektrode (1) die gesamte Aussenelektrode (2) ihrer Länge nach durchzieht.

2. Vorrichtung nach Anspruch 1, **dadurch gekennzeichnet, dass** die Spannungsquelle (4) mindestens eine Sendefrequenz von mindestens 1 MHz umfasst.

3. Vorrichtung nach Anspruch 1 oder 2, **dadurch gekennzeichnet, dass** zwischen der Spannungsquelle (4) und der Aussenelektrode (2) und/oder der Innenelektrode (1) eine Anpassungseinrichtung (13) zur Einstellung einer elektrischen Leistung angeordnet ist.

4. Vorrichtung nach einem der vorhergehenden Ansprüche, **gekennzeichnet durch** eine Vorschubeinrichtung zum axialen Verschieben des Rohrs in der Aussenelektrode (2).

5. Vorrichtung zur Erwärmung eines Rohres nach einem der vorhergehenden Ansprüche, **dadurch gekennzeichnet, dass** die Innenelektrode (1) eine Biegefeder zum Biegen des erwärmten Rohrs umfasst.

6. Vorrichtung nach einem der vorigen Ansprüche, **dadurch gekennzeichnet, dass** die Innenelektrode (1) verkupfert oder versilbert ist und/oder einen Draht zur Herabsetzung ihrer Induktivität umfasst.

7. Hochfrequenz-Heizanlage mit einer Vorrichtung zur Erwärmung eines Rohres nach einem der vorhergehenden Ansprüche,
**dadurch gekennzeichnet, dass** eine einzige Spannungsquelle (4) mit einer Mehrzahl von Aussenelektroden (2) und einer Mehrzahl von Innenelektroden (1) verbunden ist.

8. Hochfrequenz-Heizanlage nach Anspruch 7, **dadurch gekennzeichnet, dass** zwischen der Spannungsquelle (4) und den Aussen- und den Innelektroden (2,1) eine Hochfrequenz-Verteilung (14) zur einstellbaren Verteilung der elektrischen Leistung auf die Paare der Aussenelektroden (2) und der Innenelektroden (1) angeordnet ist.

## Claims

1. Device for heating a pipe, in particular for heating and bending or a plastic pipe, having
- an inner electrode (1) and
- an outer electrode (2)
and the outer electrode (2) and/or the inner electrode (1) are connected to a voltage source (4), the inner electrode and the outer electrode being arranged in such a way that a pipe wall (3) can be inserted between the inner electrode and the outer electrode, and the inner electrode (1) being arranged concentrically to the outer electrode (2)
**characterized in**
**that** the inner electrode (1) runs through the entire length of the outer electrode (2).

2. Device according to claim 1, **characterized in that** the voltage source (4) comprises at least one transmission frequency of at least 1 MHz.

3. Device according to claim 1 or 2, **characterized in that** between the voltage source (4) and the outer electrode (2) and/or the inner electrode (1) an adjustment device (13) for adjusting an electrical power is arranged.

4. Device according to one of the previous claims, **characterized by** a feed device for axial displacement of the pipe in the outer electrode (2).

5. Device for heating a pipe according to any one of the previous claims, **characterized in that** the inner electrode (1) comprises a bending spring for bending the heated pipe.

6. Device according to any one of the previous claims, **characterized in that** the inner electrode (1) is copper-plated or silver-plated and/or comprises a wire for reducing its inductance.

7. High-frequency heating installation comprising a device for heating a pipe according to one of the previous claims, **characterized in that** a single voltage source (4) is connected to a plurality of outer electrodes (2) and a plurality of inner electrodes (1).

8. High -frequency heating system according to claim 7, **characterized in that** a high-frequency distribution (14) is arranged between the voltage source (4) and the outer and the inner electrodes (2, 1) for adjustable distribution of the electric power to the pairs of outer electrodes (2) and inner electrodes (1).

## Revendications

1. Dispositif de chauffage d'un tuyau, en particulier au chauffage et à la flexion d'un tuyau en matière plastique, comportant
- une électrode intérieure (1) et
- une électrode extérieure (2)
et l'électrode extérieure (2) et/ou l'électrode intérieure (1) étant connectées à une source de tension (4),
dans lequel l'électrode intérieure et l'électrode extérieure sont agencées de telle sorte qu'une paroi de tuyau (3) peut être insérée entre l'électrode intérieure et l'électrode extérieure, et l'électrode intérieure (1) est agencée de manière concentrique par rapport à l'électrode extérieure (2), **caractérisé en ce que** l'électrode intérieure (1) traverse l'ensemble de l'électrode extérieure (2) sur sa longueur.

2. Dispositif selon la revendication 1, **caractérisé en ce que** la source de tension (4) comprend au moins une fréquence d'émission d'au moins 1 MHz.

3. Dispositif selon la revendication 1 ou 2, **caractérisé en ce qu'**un système d'adaptation (13) permettant le réglage d'une puissance électrique est disposé entre la source de tension (4) et l'électrode extérieure (2) et/ou l'électrode intérieure (1).

4. Dispositif selon l'une quelconque des revendications précédentes, **caractérisé par** un système d'avance destiné au déplacement axial du tuyau dans l'électrode extérieure (2).

5. Dispositif de chauffage d'un tuyau selon l'une quelconque des revendications précédentes, **caractérisé en ce que** l'électrode intérieure (1) comprend un ressort de flexion destiné à la flexion du tuyau chauffé.

6. Dispositif selon l'une quelconque des revendications précédentes, **caractérisé en ce que** l'électrode intérieure (1) est cuivrée ou argentée et/ou comprend un fil destiné à la réduction de son inductance.

7. Installation de chauffage à haute fréquence comportant un dispositif de chauffage d'un tuyau selon l'une quelconque des revendications précédentes,
**caractérisée en ce qu'**une seule source de tension (4) est connectée à une pluralité d'électrodes extérieures (2) et à une pluralité d'électrodes intérieures (1).

8. Installation de chauffage à haute fréquence selon la revendication 7, **caractérisée en ce qu'**une distribution à haute fréquence (14) destinée à la distribution réglable de la puissance électrique aux paires d'électrodes extérieures (2) et d'électrodes intérieures (1) est disposée entre la source de tension (4) et les électrodes extérieures et intérieures (2, 1).
